# EUROPÄISCHE PATENTSCHRIFT

(11) **EP 2 213 435 B1**
(45) Veröffentlichungstag und Bekanntmachung des Hinweises auf die Patenterteilung: **10.09.2014**
(21) Anmeldenummer: 10160126.8
(22) Anmeldetag: 10.05.2007
(51) Int. Cl.: B29C 49/64, B29C 35/08, B29C 49/68, H05B 6/80, B29C 49/12, B29K 33/20

(54) **Erwärmungsvorrichtung für Kunststoffrohlinge**
Heating device for plastic blanks
Dispositif de chauffage pour ébauches en plastique

(30) Priorität: 11.05.2006 DE 102006022207
(43) Veröffentlichungstag der Anmeldung: 04.08.2010
(62) Teilanmeldung aus: 07725075.1
(73) Patentinhaber: Krones AG, 93073 Neutraubling (DE)
(72) Erfinder: Detrois, Christian, 88190, Goldbey (FR); Forsthövel, Jochen, 93059 Regensburg (DE); Humele, Heinz, 93107, Thalmassing (DE); Schlögl, Dr. Martin, 85570 Markt Schwaben (DE); Zimmerer, Johann, 93170, Neutraubling (DE)
(74) Vertreter: Hannke, Christian

(56) Entgegenhaltungen:
- EP-A2- 1 306 195
- WO-A1-03/055665
- GB-A- 1 380 447
- JP-A- 63 307 928

## Beschreibung

Die Erfindung betrifft ein Verfahren nach dem Oberbegriff des Anspruchs 1 und eine Vorrichtung nach dem Oberbegriff des Anspruchs 12.

Bei der Herstellung von Kunststoffhohlkörpern wird oftmals ein Verfahren verwendet, bei dem Vorformlinge zuerst erwärmt, und dann verformt werden. Ein besonderes Einsatzgebiet dieser Technik ist z. B. die Herstellung von Lebensmittelbehältern, insbesondere Kunststoffflaschen, die aus Vorformlingen hergestellt werden. Diese Vorformlinge werden dazu erwärmt und anschließend zu Behältern ausgeformt. Der Erwärmungsvorgang wird meist mit Infrarotstrahlung oder naher Infrarotstrahlung vollzogen. Ein Nachteil dieser Erwärmungsvorrichtungen mit Infrarot ist der, dass der Wirkungsgrad der Erwärmungsvorgänge mit ca. 20% nur sehr gering ist.

Aus der gattungsbildenden EP 1 306 105 A2 ist ein Verfahren und eine Vorrichtung zur Steuerung eines Blasvorganges bekannt. Dabei wird den auf einem rotierenden Blasrad angeordneten Blasstationen zur Blasverformung von thermoplastischen Vorformlingen im Behälter mindestens ein unter Druck stehendes Blasfluid zugeführt. Die Heizstrahler zur Erwärmung der Preforms können als IR-Strahler, HF-Strahler oder Mikrowellen-Generatoren realisiert sein.

Die WO 03/055665 A1 beschreibt ein Verfahren und eine Vorrichtung zur Temperierung von Vorformlingen. Dabei werden die Vorformlinge mindestens zeitweilig von einer elektromagnetischen Strahlung beaufschlagt, die eine Frequenz von 1 MHz bis 900 GHz aufweist.

Die JP 63 307 928 A beschreibt ebenfalls eine Vorrichtung zum Erwärmen von Kunststoffvorformlingen.

Es ist deshalb Aufgabe der Erfindung, ein Verfahren, eine Vorrichtung bzw. eine Anordnung zu schaffen, mit der es auf energiesparende Weise möglich ist, Kunststoffvorformlinge zu erwärmen.

Die Aufgabe bezüglich des Verfahrens wird gelöst durch die Merkmale des Anspruchs 1 und die Aufgabe bezüglich der Vorrichtung durch die Merkmale des Anspruchs 12.

Das Verfahren dient zur Erwärmung von Vorformlingen, wobei unter Vorformlingen hauptsächlich aus Kunststoff bestehende Körper zu verstehen sind, die nach der Erwärmung umgeformt, insbesondere geblasen bzw. streckgeblasen werden. Vorzugsweise handelt es sich dabei um Kunststoffvorformlinge, aus denen Behälter für die Lebensmittelindustrie, insbesondere Flaschen für die Getränkeindustrie hergestellt werden. Meist handelt es sich bei dem Kunststoff um einen thermoplastischen Kunststoff, vorzugsweise um PET. Einsetzbar sind aber auch andere Materialien, wie z.B. PET-Derivate / Copolyester, andere Polyester, Polyamide, Polyacryle, Polykarbonate, Poyvinyle (wie PVC; EVOH; PVA) oder Polyolefine. Hauptaugenmerk bei der Auswahl von Kunststoffen muss dabei auf eine gute Anregbarkeit gelegt werden. Ein Maß für eine solche gute Anregbarkeit ist ein hoher dielektrischer Verlustfaktor. Das heißt, es sind auch Kunststoffe erwärmbar, die zwar selbst keinen hohen dielektrischen Verlustfaktor haben, aber durch Zugabe von Additiven oder gezielten Veränderungen am Kunststoff einen solchen erhalten.

Diese Kunststoffvorformlinge bestehen aus einem Mündungseinem Rumpf- sowie einem Bodenbereich, wobei der Mündungsbereich vorzugsweise ein Gewinde sowie eine oder mehrere Wulste aufweist, wobei zumindest eine Wulst vorzugsweise als Tragring ausgebildet ist. In den meisten Fällen ist es nicht erwünscht, dass der obere Teil des Vorformlings, also der Mündungsbereich, mit erwärmt wird, da dieser Bereich schließlich nicht umgeformt werden soll. Zu verformende Vorformlinge sind daher oft in verschieden Bereiche aufgeteilt, die entweder gar nicht oder nur wenig erwärmt werden sollen. Ein wenig bzw. nicht zu erwärmende Bereich kann aber auch einer sein, der sehr dünn ist und daher nicht viel verformt werden braucht.

Es versteht sich von selbst, dass die zu erwärmenden Bereiche der Vorformlinge mit der neuen Erwärmungsmethode wie bisher komplett in einem Schritt erwärmt werden können, d.h. der gesamte zu erwärmende Bereich der vorformlinge wird gleichzeitig erwärmt, wobei eine bevorzugte Weiterbildung der Erfindung darin besteht, dass die zu erwärmenden Bereiche der Vorformlinge schrittweise bzw. abschnittsweise (nacheinander) erwärmt werden. Schrittweise bedeutet dabei, dass der zu erwärmende Bereich der Vorformlinge zeitlich nacheinander Schritt für Schritt erwärmt wird. Der Vorformling ist dabei in mehrere Teilbereiche vorzugsweise 3 bis 9 - unterteilt, die aufeinanderfolgend erwärmt werden.

Unter einer abschnittsweisen Erwärmung wird verstanden, dass zwar der zu erwärmende Bereich gleichzeitig, jedoch bezüglich eines Höhen- oder Dickenprofils unterschiedlich erwärmt wird. Außerdem kann mit einer abschnittsweisen Erwärmung auch eine bezüglich des Umfangs der Vorformlinge unterschiedliche Erwärmung verstanden werden. Durch eine umfänglich unterschiedliche Erwärmung ist es möglich, verschiedene Formen von Behältern, wie z. B. ovale oder andere Konturbehälter leichter zu erzeugen.

Erfindungsgemäß wird die Erwärmung der Vorformlinge in einem Resonator vorgenommen. Unter einem Resonator ist ein Bauteil zu verstehen, in das elektromagnetische Strahlung eingeleitet wird und in dem diese Strahlung durch ständige Reflexion für eine bestimmte Zeitdauer gehalten wird. Es wird angestrebt, in dem Resonator ein geeignetes Mikrowellenfeld mit geeigneter Feldstärkenverteilung zu erzeugen. Die Feldstärkeverteilung hängt dabei von der Resonatorgeometrie und den anderen Komponenten (z.B. Mikrowellenkompaktkopf) ab. Geeignet bedeutet, dass sie für eine isotrope Ermwärmung möglichst gleich ist, während für eine anisotrope Erwärmung eine ungleichförmige Feldstärkenverteilung angestrebt wird. Zur Erreichung einer optimalen Feldstärkenverteilung ist es auch möglich, mehrere Mikrowellen zu überlagern, wobei die Mikrowellen sowohl die gleiche, als auch unterschiedliche Frequenzen haben können.

Der Resonator ist so ausgestaltet, dass die Resonatorhöhe und damit auch die Ausdehnung des Mikrowellenfeldes vorzugsweise nur einem Teil der Höhe der zu erwärmenden Vorformlinge entspricht. Vorzugsweise beträgt die Höhe 0,01 cm bis 20cm, besonders bevorzugt 0,5 cm bis 1 cm. Des weiteren ist der Resonator ein offenes, ring- bzw. scheibenförmiges System, in das die Vorformlinge eingeführt werden können. Dazu weist er eine vorzugsweise runde Öffnung auf, deren Durchmesser in etwa dem 1,1 bis 2-fachen Durchmesser des Vorformlings entspricht und somit den Vorformling zumindest bezüglich seiner Höhe abschnittsweise vollumfänglich umgibt. Auf diese Weise kann der Vorformling in den Resonator hinein und aus diesem heraus bewegt werden. Die Resonatorbreite beträgt zwischen 1 cm und 15 cm, bevorzugt ca. 4 cm.

Die Öffnung des Resonators ist dabei so gewählt, dass der Durchmesser kleiner ist als die Wellenlänge der den Vorformling zu erwärmenden Strahlung, um einen Austritt der Strahlung aus dem Resonator zu vermeiden. Durch eine solche geometrische Konfiguration des Resonators ist es möglich, eine mikrowellenbasierte Erwärmungsvorrichtung für Vorformlinge zu bauen, die keine sehr strengen Abschirmanforderungen erfüllen muss. Je nach Geometrie des Resonators können ober- und / oder unterhalb desselben Schutzvorrichtungen angebracht werden, die das Ausdringen von Leckstrahlung verhindern. Bevorzugte Schutzvorrichtungen sind Hohlzylinder, deren Geometrie an die Resonatorgeometrie, die Wellenlänge usw. angepasst ist.

Die Öffnung des Resonators ist vorzugsweise so angebracht, dass der Vorformling in Richtung seiner Längsachse in bzw. durch den Resonator bewegt wird. Es ist jedoch auch möglich, dass der Resonator eine Öffnung aufweist, die ein Hineinbewegen des Vorformlings in den Resonator quer zu seiner Längsachse ermöglicht.

Erfindungsgemäß ist jedem Vorformling in der Erwärmungseinrichtung ein Resonator zugeordnet. Eine Ausführungsform der Erfindung besteht darin, dass die Vorformlinge entlang einer Bahn transportiert werden, wie sie auch im Stand der Technik heute häufig zu finden ist, nämlich entlang zweier Geraden, die jeweils an deren Enden durch Umlenkbereiche miteinander verbunden sind.

Eine besonders bevorzugte Weiterbildung der Erfindung besteht jedoch darin, dass die Resonatoren im Kreis um eine feste Maschinenachse umlaufen. Die Vorformlinge beschreiben also bezüglich einer Ebene senkrecht zur Maschinenachse eine Kreisbahn. Diese Variante hat den Vorteil, dass sehr hohe Maschinengeschwindigkeiten realisiert werden können. Vorzugsweise weist diese Erwärmungseinrichtung 10 bis 80 Resonatoren auf, besonders bevorzugt 20 bis 40 Resonatoren.

Die Erwärmung der zu erwärmenden Bereiche findet vorzugsweise so statt, dass der Vorformling in einer Richtung seiner Längsachse und ausschließend in entgegengesetzter Richtung durch den Resonator bewegt wird. Es ist aber auch denkbar, dass die Vorformlinge nicht nur ein oder zweimal, sondern mehrmals durch den Resonator hindurchbewegt werden. Dabei ist eine geradzahlige Bewegung, wie z. B. eine zweifache, vierfache oder sechsfache Bewegung durch den Resonator besonders sinnvoll.

Zur Erwärmung der Vorformlinge ist es aber auch möglich, eine Resonatorkavität zu verwenden, in die der zu erwärmende Bereich der Vorformlinge komplett eingeführt wird, d.h., der vorformling wird in einer seinen Erwärmungsbereich vollständig umgebenden Kavität erwärmt.

So kann der Prozess der Erwärmung ohne Bewegung der Vorformlinge bezüglich ihrer Längsachse vonstatten gehen, indem nämlich die Vorformlinge z.B. radial in die Kavität eingeführt werden. Eine vertikale Ein- bzw. Ausfuhr der Vorformlinge in/aus der Kavität ist jedoch auch denkbar.Vorteilhaft bewegt sich die Kavität auf einer im Wesentlichen kreisförmigen Bahn.

Anstatt der Verwendung einer Kavität, kann auch ein Resonatorenstapel herangezogen werden, bei dem eine unterschiedliche Anzahl von Resonatoren übereinandergestapelt wird, um somit eine "Kavität" zu erzeugen, in die ein vorformling bezüglich seiner Länge nahezu vollständig oder ganz eingebracht werden kann.

Eine besonders bevorzugte Weiterbildung des Verfahrens besteht darin, dass die Temperatur des Vorformlings vor und/oder während und/oder nach dem Erwärmen mindestens einmal gemessen wird. Dadurch erhält das Verfahren den Vorteil, dass eine besonders genaue Temperaturregelung bzw. Temperaturprofilierung des Vorformlings möglich ist, wobei es möglich ist, dass die Temperatur von innen und/oder von außen gemessen wird. Die Messung erfolgt mittels eines geeigneten Sensors, wie z.B. eines Pyrometers oder eines glasfaseroptischen Sensors, wobei letzterer den Vorteil hat, dass er durch Mikrowellen nicht beeinflusst wird und dass die Mikrowellen durch den Sensor nicht beeinflusst werden. Der Pyrometer jedoch hat den Vorteil, dass er sehr schnell und berührungslos arbeitet.

Die gemessenen Temperaturwerte werden vorzugsweise an eine Steuerungs- und Regelungseinrichtung weitergegeben, damit eine möglichst genaue Temperierung der Vorformlinge erfolgen kann, wobei eine besonders bevorzugte Weiterbildung der Erfindung darin besteht, dass bei einer mehrfachen Durchführung der Vorformlinge durch den Resonator die Temperatur nach dem ersten Hindurchführen gemessen wird, so dass bei einem zweiten Hindurchbewegen des Vorformlings bereits eine Anpassung des Erwärmungsvorgangs vorgenommen werden kann. Auf diese Weise ist es zum Einen möglich ein sehr genaues Temperaturprofil zu erzeugen, zum Anderen kann auf äußere Umstände wie z. B. die Feuchtigkeit der Vorformlinge besonders gut eingegangen werden.

Allgemein können mit den gemessenen Temperaturwerten die nachfolgenden Erwärmungsprozesse geregelt werden. Es wäre jedoch auch möglich, dass mit dem mindestens einen gemessenen Temperaturwert eines Vorformlings der Erwärmungsvorgang desselben geregelt wird.

Als Regelgröße für den gesamten Vorgang kann nicht nur die Temperatur des Vorformlings, sondern auch die reflektierte Leistung der Mikrowelle verwendet werden.

Eine besondere Ausgestaltung des Erwärmungsverfahrens inklusive der Temperaturmessung besteht darin, dass der Vorformling in einem ersten Schritt in Richtung seiner Längsachse durch den Resonator bewegt wird, dass in einem zweiten Schritt (insbesondere nach dem ersten Durchlaufen des Resonators und/oder während dieser Erwärmungsphase) die Temperatur der Vorformlinge gemessen wird noch während sie sich im Einflussbereich des Mikrowellenfeldes befinden, dass das Ist-Temperaturprofil der Vorformlinge mit einem Soll-Temperaturprofil in einem dritten Schritt verglichen wird und dass die Mikrowellenleistung / die Feldstärkenverteilung im Resonator in einem vierten Schritt sofort angepasst wird, so dass die Vorformlinge während der weiteren Bewegung durch den Einflussbereich des Mikrowellenfeldes bereits mit einer angepassten Strahlungsleistung beaufschlagt werden, wobei die Anpassung auch erfolgen kann, noch bevor die Vorformlinge den Resonator wieder verlassen. Der Vorteil dieser Verfahrensvariante besteht darin, dass eine sehr schnelle Reaktion auf äußere Umstände, wie z. B. den Feuchtigkeitsgehalt des Vorformlings, möglich ist. Dadurch kann die minimale Zeit für die Erwärmung verwendet werden und es müssen u.U. weniger Ein- bzw. Ausfahrzyklen durch den Resonator durchgeführt werden.

Eine weitere Verfahrensvariante zur Erwärmung besteht darin, dass in einem ersten Schritt der Vorformling in Richtung seiner Längsachse durch den (insbesondere mit Mikrowellen beaufschlagten) Resonator bewegt wird, dass in eine zweiten Schritt die Bewegung des Vorformlings in Richtung seiner Längsachse stillgesetzt wird, dass in einem dritten Schritt die Ermittlung eines Temperaturprofils des Vorformlings mittels höhenbeweglicher Temperatursensoren oder mittels beweglicher Temperatursensorenvon innen und/oder außen erfolgt, dass in einem weiteren Schritt das Ist-Temperaturprofil des Vorformlings mit einem Soll-Temperaturprofil verglichen wird, dass in einem vorletzten Schritt der Resonator bezüglich seiner Strahlungsleistung/ Feldstärkenverteilung angepasst wird und dass in einem letzten Schritt der Vorformling in entgegengesetzter Richtung durch den angepassten Resonator bewegt wird. Diese Verfahrensvariante hat unter anderem den Vorteil, dass dem Vorformling vor der Temperaturmessung eine Ausgleichszeit bleibt, in der sich die eingebrachte Wärme besser verteilen kann. Dadurch erhält man genauere Werte bezüglich des gewünschten Temperaturprofils des Vorformlings.

Es wäre auch möglich, die Vorformlinge in Richtung deren Längsachse durch den Resonator hindurchzubewegen, den Resonators mit Mikrowellen zu beaufschlagen und die Vorformlinge durch den mit Mikrowellen beaufschlagten Resonator hindurchzubewegen.

Es ist selbstverständlich auch möglich, Vorformlinge zu erwärmen, das erreichte Temperaturprofil am Ende des Erwärmungsvorgangs zu bestimmen und daraus die Einstellungen für die nächsten Erwärmungsvorgänge der Vorformlinge zu bestimmen. Diese Variante hat den Vorteil, dass keine leistungsfähigen bzw. sehr schnellen Regelalgorithmen bzw. Regelstrukturen benötigt werden.

Eine weitere mögliche Erwärmung besteht darin, dass die Vorformlinge bei ausgeschalteter Mikrowelle in den Resonator eingefahren und bei eingeschalteter Mikrowelle aus dem Resonator herausgefahren werden. Dadurch lassen sich einfache (nicht sehr stark profilierte Erwärmungsvorgänge) energiesparend und schnell bewerkstelligen.

Gemäß einer besonders bevorzugten Weiterbildung der Erfindung werden die Vorformlinge während der Erwärmung (zumindest teilweise) um ihre eigene Längsachse gedreht. Die Drehung kann zum Einen gleichmäßig erfolgen, was - bei gleichmäßiger Feldstärkenverteilung - zu einem gleichmäßigen Temperaturprofil bezüglich des Umfangs führt, sie kann zum Anderen aber auch ungleichmäßig erfolgen, was dann zu einer Temperaturprofilierung bezüglich des Umfangs der Vorformlinge führt. Die zweite Verfahrensvariante kann z. B. bei der Herstellung von Formbehältern, wie z. B. ovalen Behälter, eingesetzt werden.

Die Herstellung von Formbehältern kann dadurch unterstützt werden, dass im Resonator oder in der Kavität eine anisotrope Feldstärkenverteilung generiert wird, wodurch eine differenzierte Erwärmung auch dann erfolgt, wenn die Vorformlinge nicht gedreht bzw. bewegt werden. Eine weitere Möglichkeit der Erzeugung unterschiedlicher Temperaturbereiche in Vorformlingen ist die der unterschiedlichen Verweildauer im Mikrowellenfeld.

Erfindungsgemäß weist eine Mikrowellenerwärmungseinheit mindestens einen Mikrowellenerzeuger, einen Mikrowellenleiter sowie einen Resonator auf. Der Mikrowellenerzeuger kann z.B. ein Magnetron, ein Klystron oder ein Gyrotron sein, wobei die Erzeugung der Wellen auf beliebige Art und Weise erfolgen kann. Die Mikrowellenleiter sind vorzugsweise Hohlleiter, wobei runde bzw. rechteckige Querschnitte besonders zu bevorzugen sind. Eine Verwendung von Koaxialleitern ist nicht auszuschließen.

Gemäß einer bevorzugten Weiterbildung der Erfindung befindet sich der Mikrowellenerzeuger in einem Mikrowellenkompaktkopf, wobei dieser weiterhin mindestens eine Wasserlast, einen Zirkulator, einen Mikrowellenleiter sowie einen Heiztransformator und Anschlussleitungen für den Mikrowellenerzeuger und den Heiztransformator umfasst. Die Wasserlast in dem Mikrowellenkompaktkopf wird benötigt, um überschüssige Mikrowellenenergie absorbieren und unschädlich machen zu können. Bei dieser Wasserlast handelt es sich vorzugsweise um einen mit Wasser gefüllten Silikon- oder Kunststoffschlauch, wobei das Wasser in einem Kreislauf umläuft, um ständig genug Restenergie aufnehmen zu können.

Des Weiteren ist ein Zirkulator vorhanden, der vorzugsweise aus drei gekreuzten Koaxialleitern besteht, und dessen Aufgabe es ist, Mikrowellen in den Kompaktkopf jeweils in die richtige Richtung zu leiten. Der zirkulator ist unter anderem deshalb notwendig, da Mikrowellen, die vom Ort ihrer Erzeugung zum Resonator und wieder zurückgeleitet werden, nicht wieder ins Magnetron zurückfließen dürfen, da sonst eine Zerstörung desselben droht. In diesem Fall muss also eine Weiterleitung in die Wasserlast durchgeführt werden. Dazu sind im Zirkulator Ferrite integriert, die die Mikrowellen jeweils zum richtigen Ausgang weiterleiten.

Vorzugsweise ist weiterhin ein Mikrowellentuner vorhanden, der das Einstellen der Leistung im Resonator ermöglicht. Dabei ist der Einsatz eines manuellen Tuners genauso möglich, wie der eines automatischen Tuners. Bevorzugt weist die Vorrichtung auch mindestens einen Temperatursensor auf.

Gemäß einer Ausführungsform der Erfindung weist ein Erwärmungsofen für Vorformlinge einen zentralen Mikrowellengenerator auf, der die erzeugten Mikrowellen an die jeweiligen Resonatoren weiterleitet. Diese Lösung hat den Vorteil, dass die zur Verfügung zu stellende Technik, wie z.B. der Mikrowellenerzeuger, nur einmal benötigt wird.

Eine andere Ausgestaltung der Erfindung sieht mehrere Mikrowellenerzeuger vor, die jeweils einige Resonatoren mit Mikrowellen bedienen. So ist es z.B. möglich, dass vier Mikrowellenerzeuger für die Resonatoren zur Verfügung stehen. Diese Lösung hat den Vorteil, dass bei einem Ausfall eines Mikrowellenerzeugers trotzdem mindestens dreiviertel der Erwärmungsstrecke weiter betrieben werden kann. Gemäß einer besonders zu bevorzugenden Weiterbildung der Erfindung weist jeder Resonator einen eigenen Mikrowellenkompaktkopf mit Mikrowellenerzeuger auf. Durch diese Ausprägung gelingt es, jedem Vorformling eine möglichst individuelle Behandlung zukommen zu lassen.

Eine weitere vorteilhafte Weiterbildung der Erfindung besteht darin, dass sich die Resonatoren mit deren zugeordneten Mikrowellenerzeugern auf einem Karussell befinden, das sich um eine zentrale Achse dreht. Diese Karussellanordnung hat den Vorteil, dass sehr hohe Maschinenleistungen und dadurch Vorformlingsaustragsleistungen realisiert werden können.

Es ist jedoch auch denkbar, dass die Resonatoren an Trägern befestigt sind, die keine Kreisbahn beschreiben, sondern eine zumindest teilweise geradlinige Bahn, wie z.B. in Linearöfen. Dazu ist es denkbar, die Resonatoren an Trägern zu befestigen und diese mit Hilfe einer Kette entlang einer Linie zu bewegen.

Die Leistung des mindestens einen Mikrowellengenerators liegt vorzugsweise im Bereich zwischen 1kW und 10kW, wobei besonders gute Ergebnisse mit einer Generatorleistung von 2kW bis 3kW erzielt werden.

Der Frequenzbereich, der für die Erwärmung zu verwendenden Mikrowellen, liegt zwischen 300 MHz und 300 GHz, wobei besonders bevorzugte Frequenzbereiche bei 915 MHz, 2,45 GHz und 5,8 GHz liegen.

Gemäß einer vorteilhaften Weiterbildung der Erfindung weist jeder Resonator eine Aufnahmeeinheit für Vorformlinge auf. Diese Aufnahmeeinheit kann vorzugsweise gedreht werden, so dass sich der Vorformling um seine eigene Achse bewegt. Eine Bewegung entlang der Längsachse des Vorformlings ist jedoch auch nötig, um ihn in bzw. aus dem Resonator zu bewegen. Vorzugsweise weist eine Bewegungseinheit einen kombinierten Hub-/Senk-/Drehantrieb auf. Die Bewegungen der Vorformlinge zum bzw. im Resonator finden zwar vorzugsweise in Richtung der bzw. um die Längsachse der Vorformlinge statt, jedoch ist eine Bewegung um andere Achsen auch möglich. So ist es z.B. denkbar, dass der Vorformling nicht um seine Längsachse gedreht wird, sondern dass der Vorformling um eine Achse durch den Resonator eine oszillierende Bewegung durchführt. Diese Ausgestaltung hat den Vorteil, dass eine beliebigere Wärmeverteilung im Vorformling durch die Mikrowellen erfolgt. Alternativ kann aber auch der Resonator relativ zum Vorformling bewegt werden.

Eine besonders bevorzugte Ausführungsform besteht darin, dass jedem Vorformling eine Mikrowellenerwärmungseinheit zugeordnet ist. Andere Anordnungen bei denen weniger Erwärmungseinheiten vorhanden sind als Vorformlinge in der Vorrichtung Platz finden, sind auch denkbar.

Um die Kapazität einer solchen Erwärmungsvorrichtung zu erhöhen, ist es auch vorstellbar, dass sich mehrere Erwärmungsebenen übereinander befinden. Diese Erwärmungsebenen können entweder unabhängig voneinander beschickt werden, es ist aber auch ein Durchlauf denkbar, bei dem die Vorformlinge in einer Ebene in die Vorrichtung eingebracht werden, während sie in der anderen Ebene aus der Vorrichtung herausgeführt werden.

Eine weitere vorteilhafte Erwärmungsvariante besteht darin, dass die Vorformlinge bezüglich ihrer Längsachse keine Bewegung erfahren, sondern dass die Resonatoren entlang der Vorformlinge bewegt werden.

Die Erwärmung kann absolut individuell für einzelne oder für verschiedene Gruppen von Vorformlingen eingestellt werden. Unabhängig voneinander einzustellende Parameter sind z.B. Hub, Hubgeschwindigkeit, Rotationsgeschwindigkeit, Mikrowellenleistung, Mikrowellentuningeinstellungen, Fsidstarkenverteilungen im Resonator oder Impedanzanpassung in Abhängigkeit einer gemessenen Dielektrizitätskonstante. Individuelle Einstellungen können aus unterschiedlichen Gründen notwendig sein, so z.B. wegen der unterschiedlichen Feuchtigkeitsgehalte der Vorformlinge.

Bei der Vorrichtung handelt es sich vorzugsweise um eine Erwärmungsvorrichtung für Vorformlinge aus denen PET-Flaschen hergestellt werden. Eine Einordnung einer solchen Erwärmungsvorrichtung in eine Maschinenanordnung umfassend z.B. eine Streckblasmaschine, einen Füller, einen Verschließer, eine Etikettiermaschine oder dgl. ist daher sinnvoll.

Eine weitere vorteilhafte Ausführungsform besteht darin, dass die Erwärmungsvorrichtung einen Schleifringübertrager für Hochspannung aufweist, sodass die Übertragung von Energie von stationären Teilen in die bewegten Teile erfolgen kann.

Gemäß einer bevorzugten Weiterbildung der Erfindung ist es vorteilhaft, wenn die Vorformlinge nicht nur mit Mikrowellen, sondern auch mit Infrarotstrahlung beaufschlagt werden. Es ist also z.B. denkbar, dass dem Vorformling durch die Infrarotstrahlung ein Grundwärmeprofil aufgeprägt wird und die exakte Temperaturprofilierung erst durch die Mikrowelle vorgenommen wird. Dieser Vorgang ist aber auch umgekehrt vorstellbar, sodass also erst mit Hilfe der Mikrowellen ein Grundtemperaturprofil aufgeprägt wird, sodass dann mit Hilfe von Infrarotstrahlung eine genauere Temperaturprofilierung im Vorformling erzeugt werden kann. Hier ist es aber auch vorstellbar, dass in einem Mikrowellenofen zusätzlich Infrarotstrahler angebracht sind, sodass die beiden Erwärmungsmethoden in beliebiger Reihenfolge, in beliebigen Zonen sowie in beliebiger Intensität miteinander kombiniert werden können.

Eine konkrete Ausführungsform der Erfindung wird anhand der nachfolgenden Zeichnungen näher beschrieben.

Dabei zeigen:
- Fig.1: eine isometrische Ansicht einer Erwärmungsvorrichtung,
- Fig. 2: ein Ausschnitt aus der Erwärmungsvorrichtung gemäß Fig.1,
- Fig. 3: Eine Detailansicht einer Erwärmungsvorrichtung,
- Fig. 4: einen Mikrowellenkompaktkopf,
- Fig. 5a bis 5e: einen schematischen Verfahrensablauf zur Erwärmung von Vorformlingen,
- Fig. 6: eine Draufsicht auf einen Anlagen zum Herstellen von Behältern,
- Fig. 7: eine Seitenansicht eines Resonators,
- Fig. 8: eine Seitenansicht einer Übergabesituation von einem Resonator und zu einem Resonator,

- Fig. 9: eine isometrische Ansicht einer Ausbildungsform einer Erwärmungsvorrichtung,
- Fig. 10: einen Ausschnitt aus der Darstellung gemäß Fig. 9 und
- Fig. 11: eine weitere Ausführungsform eines Mikrowellenleiters mit Resonator

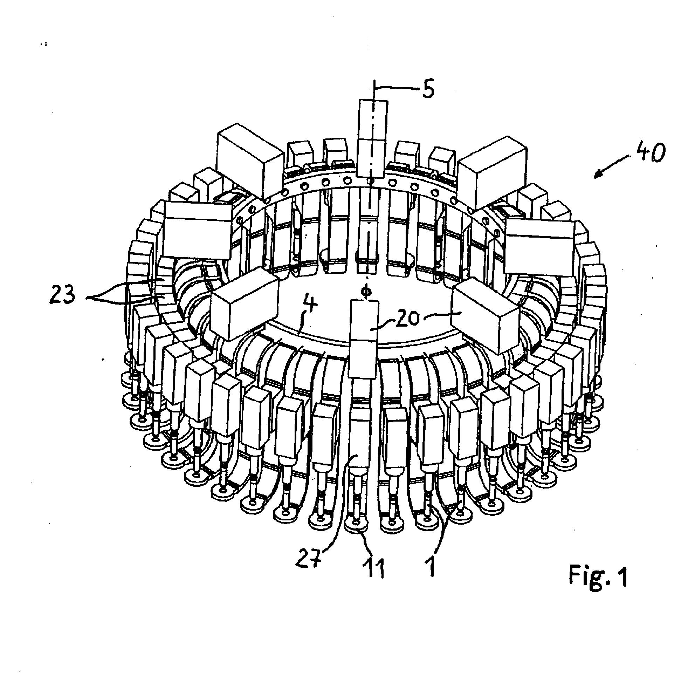

Figur 1 zeigt eine kreisrunde Erwärmungsvorrichtung für Vorformlinge 1, wobei diese im Laufe der Erwärmung gemäß dem Umfang der Erwärmungsvorrichtung auf einer Kreisbahn bewegt werden. Die Erwärmungsvorrichtung weist einen Träger 4 auf, der hier gleichzeitig einen Rechteckhohlleiter darstellt. An diesem Träger 4 sind verschiedene Baueinheiten befestigt, so etwa acht Mikrowellenkompaktköpfe 20 und vierzig Mikrowellenerwärmungseinheiten 3. Diese am Träger 4 befestigten Einheiten laufen gemeinsam um die Maschinenachse 5 um. Die Übergabe von einer vorgeschalteten Einheit zum Ofen 40 erfolgt mittels eines Sterns, wie z. B. einem Sägezahnstern oder einem Klammerstern.

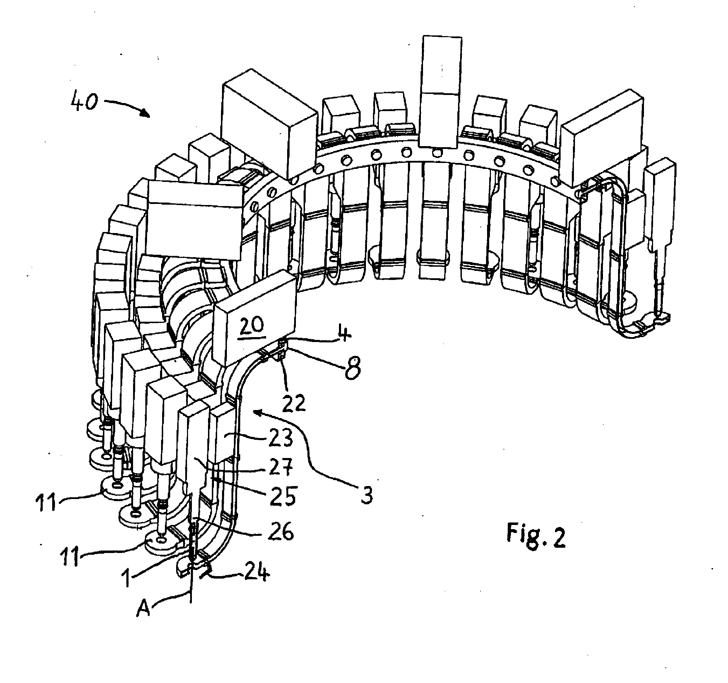

Figur 2 zeigt einen Ausschnitt des Ofens 40 gemäß Figur 1, wobei hier die Mikrowellenerwärmungseinheit 3 besser erläutert werden kann. Auch hier sind die die Mikrowellen erzeugenden Mikrowellenkompaktköpfe 20 zu sehen, die direkt mit den Träger 4, der hier einen Hohlleiter 22 darstellt, verbunden sind. Von dem Träger 4 in Richtung zur Mikrowellenerwärmungseinheit 3 ist ein Einkoppelelement 8 angebracht, das die von Mikrowellenkompaktkopf 20 erzeugten Mikrowellen vom Träger 4 in die Mikrowellenerwärmungseinheit 3 einkoppelt.

Die Mikrowellenerwärmungseinheit 3 besteht aus einem s-förmig gebogenen Rechteckmikrowellenhohlleiter, dessen erstes Ende am Träger 4 befestigt ist und an dessen zweitem Ende ein Resonator 11 befestigt ist. Der Resonator 11 ist ein scheiben- / plattenförmiges, innen hohles Element, in dessen Mitte ein kreisrundes Loch vorhanden ist. Die Ausmaße des Lochs sind so gewählt, dass die jeweils zu erwärmenden Vorformlinge 1 problemlos hindurchgeführt werden können, wobei der Resonator 11 eine Höhe aufweist, die nur einem Teil der Höhe der Vorformlinge entspricht. Der hohle Resonator 11 stellt eine Verlängerung der Mikrowellenerwärmungseinheit 3 dar und wird - wie der Hohleiter - von Mikrowellen durchströmt. Im Bereich des Resonators 11 ist an der Mikrowellenerwärmungseinheit 3 ein Temperatursensor 24 befestigt, der die Temperatur von in den Resonator 11 ein- oder austauchenden oder aus ihm herausgeführten Vorformlingen 1 misst.

Des Weiteren ist an der Mikrowellenerwärmungseinheit 3 ein Mikrowellentuner 23 befestigt, mit Hilfe dessen es durch Veränderung des Leiterraumes der Mikrowellenerwärmungseinheit 3 möglich ist, die Mikrowellen zu beeinflussen - d.h. die Feldstärkenverteilung bei eingeführtem Vorformling so zu optimieren, dass die reflektierte und nicht vom Vorformling 1 absorbierte Energiemenge minimiert wird - und somit auch den Erwärmungsvorgang der Vorformlinge 1 zu steuern bzw. zu regeln.

Radial nach außen vor der Mikrowellenerwärmungseinheit 3 vorgelagert befindet sich eine Aufnahmeeinheit 25, deren grundsätzliche Aufgabe es ist, den Vorformling 1 aufzunehmen und mit einer Bewegung zu beaufschlagen, die ein effektives Erwärmen ermöglicht. Die Aufnehmeinheit 25 besteht aus einer Vorformlingshalteeinheit 26 und einer Bewegungseinheit 27 (für die Vorformlinge). Die Vorformlingshalteeinheit 26 ist hier ein Dorn, der in die Mündung des Vorformlings 1 eindringt und diesen somit hält.
Bevorzugt ist mindestens ein Teil der Vorformlingshalteeinheit aus einem geeigneten nichtmetallischen Material zu fertigen, da sonst evtl. aus der Kavität Leckstrahlung austritt. Bevorzugte Materialien sind Kunststoffe mit niedrigem dielektischen Verlustfaktor, wie z.B. Teflon.

Es ist aber hier nicht nur ein Halten durch einen Innengreifer, sondern auch durch einen Außengreifer denkbar.

Die Bewegungseinheit 27 ist vorzugsweise ein multifunktionaler Antrieb, wobei entweder verschiedene Antriebe zu der Bewegungseinheit 27 verschmolzen werden, oder wobei die Bewegungseinheit 27 von einem Antrieb gebildet wird, der alle Bewegungserfordernisse erfüllt. Zum Einen ist eine Senkbewegung erforderlich, die den Vorformling 1 entlang seiner Längsachse A von oben in den Resonator 11 einführt. Zum Anderen ist auch eine Hubbewegung erforderlich, die den Vorformling 1 entlang seiner Längsachse wieder aus dem Resonator 11 herausführt. Eine weitere Bewegung, die den Erwärmungsprozess enorm flexibler gestaltet ist eine Drehbewegung, die den Vorformling 1 um seine Längsachse A drehen lässt.

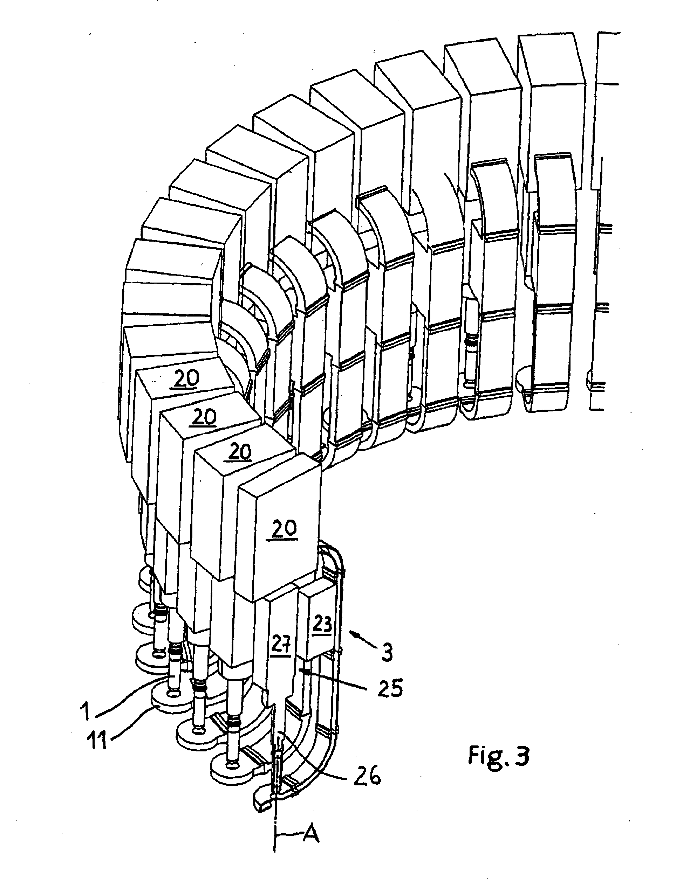

Figur 3 weist eine andere Ausführungsform der Erwärmungseinheit für Vorformlinge 1 auf. Die wesentlichen Unterschiede bestehen darin, dass jeder Mikrowellenerwärmungseinheit 3 ein eigenen Mikrowellenkompaktkopf 20 zugeordnet ist. Dazu ist die Mikrowellenerwärmungseinheit 3, die auch hier wieder als Rechteckmikrowellenhohlleiter ausgebildet ist radial nach außen c-förmig gebogen. Das eine Ende mündet dabei in dem Mikrowellenkompaktkopf 20, während an dem anderen Ende wieder ein Resonator 11 befestigt ist. Des weiteren weist die Mikrowellenerwärmungseinheit 3 erneut einen Mikrowellentuner 23 auf, der die gleiche Aufgabe erfüllt wie der gemäß Figur 2. Auch hier wird der Vorformling 1 durch einen Aufnahmeeinheit 25 gehalten, die eine Vorformlingshalteeinheit 26 und eine Bewegungseinheit 27 umfasst.

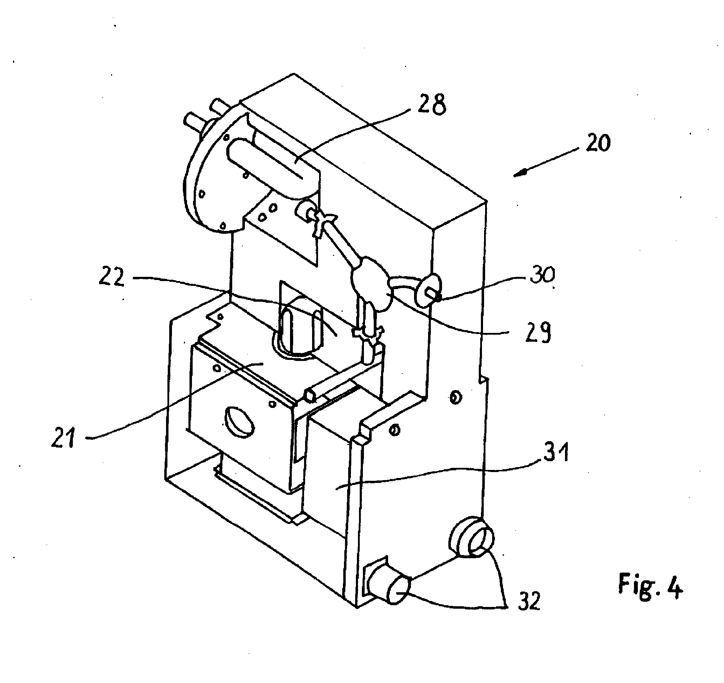

Figur 4 zeigt einen Schnitt durch den Mikrowellenkompaktkopf 20. In ihm befindet sich ein Mikrowellenerzeuger 21, wie z. B. ein Magnetron oder ein Klystron, durch den Mikrowellen erzeugt und mittels eines Mikrowellenleiters 22 zum Zirkulator 29 und zu dessen Applikatorausgang 30 geleitet werden. Der Mikrowellenkompaktkopf 20 weist zwei Anschlüsse 32 auf, wobei ein Anschluss der Steckanschluss für die Heizspannung und der andere Anschluss der Anschluss für die Hochspannung für den Mikrowellenerzeuger 21 ist.

Mikrowellen, die von dem Applikatorausgang 30 in die in Figur 4 nicht gezeigte Mikrowellenerwärmungseinheit 3 geleitet werden, werden ständig reflektiert und kommen so auch wieder zum zirkulator 29 des Mikrowellenkompaktkopfes 20 zurück. Um ein Eindringen der Mikrowellen in den Mikrowellenerzeuger 21 zu verhindern, ist der Zirkulator 29 in der Lage, reflektierte Strahlung gezielt in Richtung zur Wasserlast 28 weiterzuleiten. Die Wasserlast 28 wird hier durch einen u-förmigen Silikonschlauch gebildet, der vom Kühlwasser durchflossen ist. Durch diesen Mikrowellenkompaktkopf 20 ist auf sehr kompaktem und engem Raum die Erzeugung von Mikrowellen für die Erwärmung der Vorformlinge 1 durchführbar.

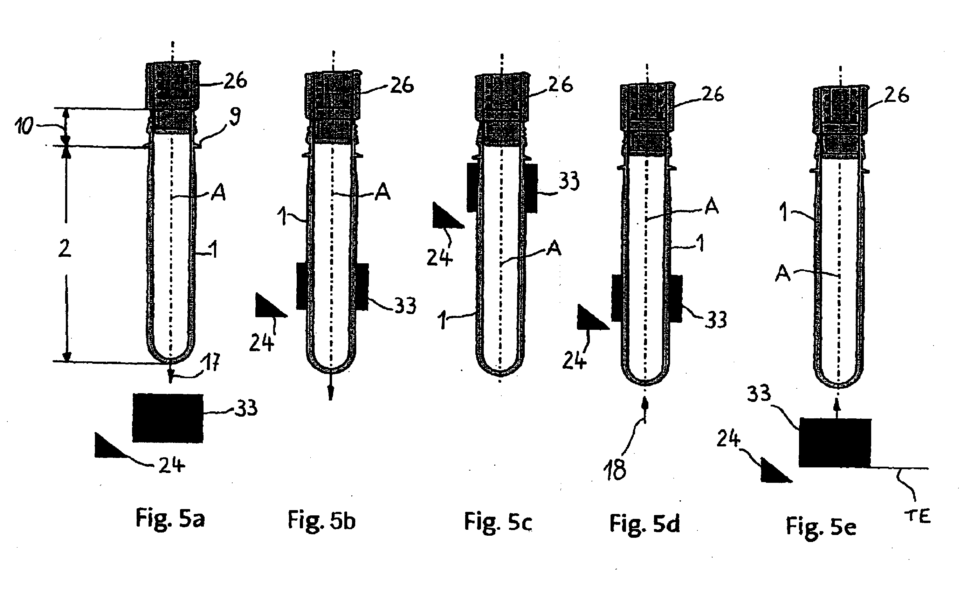

Figur 5 zeigt in fünf Schritten verschiedene Positionen des Vorformlings 1 im Verlauf seiner Erwärmung in der Erwärmungseinheit. Der Vorformling 1 weist dabei einen zu erwärmenden Bereich 2, einen nicht zu erwärmenden Bereich 10 sowie einen in dem Bereich 10 befindlichen Tragring 9 auf.

Der Vorformling 1 ist konzentrisch auf eine Vorformlingshalteeinheit 26 aufgesteckt. Durch die in den Figuren 2 und 3 beschriebene Bewegungseinheit 27 ist es nun möglich den Vorformling 1 in Richtung des Pfeils 17 und 18 durch den Resonator 11 zu bewegen. Der schwarze Balken 33 stellt dabei den Mikrowelleneinflussbereich 23 des hier nicht gezeigten Resonators 11 dar. In einem ersten Schritt wird gemäß Figur 5a begonnen, den Vorformling 1 entlang seiner Längsachse A in Richtung des Pfeils 17 in den Mikrowelleneinflussbereich23 hineinzubewegen.

Figur 5B zeigt bereits eine Position, in der der Vorformling 1 ein Stück weit durch den Mikrowelleneinflussbereich 33 bewegt wurde.

Der Temperatursensor 24,der kurz unterhalb der Resonatorebene TE angebracht ist, hat dabei die bereits durch die Mikrowellen veränderte Temperatur des Vorformlings 1 von außen aufgenommen.

Grundsätzlich ist auch eine Temperaturmessung von innerhalb des Vorformlings 1 denkbar.

Figur 5C zeigt eine Position, in der bereits der gesamte zu erwärmende Bereich des Vorformlings 1 in dem Mikrowelleneinflussbereich 33 war oder ist. Dies ist auch der Umkehrpunkt, nach dessen Erreichen ein Ausführen des Vorformlings 1 aus dem Mikrowelleneinflussbereich 33 entlang der Längsachse A in Richtung des Pfeils 18 stattfindet.

Figur 5D zeigt eine Position, die der von Figur 5B entspricht, wobei hier der Vorformling 1 entlang seiner Längsachse A in Richtung des Pfeils 18 bewegt wird. Mit dem Beginn des Herausfahrens des Vorformlings 1 aus dem Mikrowelleneinflussbereich 33 wird auch eine Anpassung der Erwärmung mittels Mikrowellen vorgenommen, so dass die Solltemperatur des Vorformlings 1 exakt erreicht werden kann. Durch diese Kombination von Temperatursensor 24 und Anpassung der Mikrowellen ist ein möglichst exaktes Temperaturprofil in den Vorformling 1 einzubringen. Die Vorformlingshalteeinheit 26 kann mit einem hier nicht gezeigten Loch ausgestattet sein, durch das z.B. ein Temperaturfühler in den Innenraum des zu erwärmenden Vorformlings 1 eindringt, oder durch das bestimmte Medien z.B. ein Kühlmedium zum Temperaturausgleich eindringen kann.

Figur 5E zeigt eine Position, die der aus Figur 5A entspricht, wobei hier der Erwärmungsvorgang bereits abgeschlossen ist.

Nun kann z.B. eine Ruhephase folgen, es kann aber auch ein zweiter oder dritter Erwärmungsvorgang durch Hindurchführen durch den Mikrowelleneinflussbereich 33 durchgeführt werden.

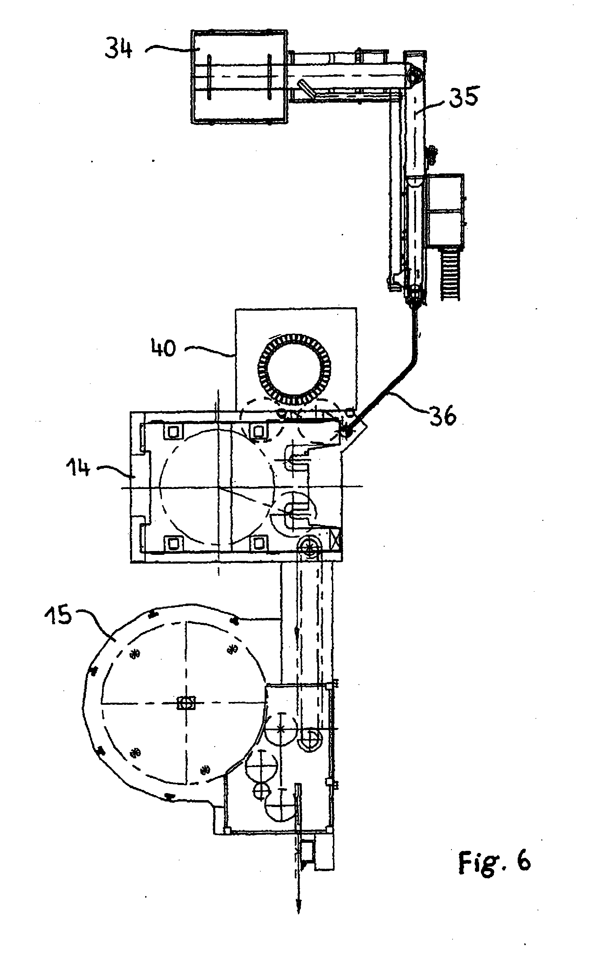

Figur 6 zeigt eine Vorrichtung zum Herstellen von Behältern. Diese Vorrichtung weist einen Vorformlingsspeicher 34 auf, in den die Vorformlinge 1 unsortiert hineingegeben werden.

Ein Rollensortierer 35 übernimmt die Vereinzelung und Sortierung der Vorformlinge 1, die dann zu einer Zuführrutsche 36 geführt werden, die die Zuführung zum Ofen 40 vornimmt.

In dem Ofen 40 werden die Vorformlinge 1 wie beschrieben erwärmt. Nach der Erwärmung erfolgt eine Übergabe in die Streckblasmaschine 14, die fertige Behälter herstellt. Nach der Behälterherstellung erfolgt eine Übergabe an die Füllmaschine 15 und in einen hier nicht mehr gezeigten Verschließer und / oder eine Etikettiermaschine. Auf diese Weise entsteht ein fertig gefüllter und verschlossener Behälter, wie z.B. eine Getränkeflasche. Zwischen dem Ofen 40 und der Streckblasmaschine 14 sind vorzugsweise mindestens zwei Transportsterne angebracht, die eine aktive und / oder passive Kühlung der erwärmten Vorformlinge 1 bewirken. An dieser Stelle des Herstellungsprozesses kann es vonnöten sein, dass die erwärmten Vorformlinge eine Ausgleichszeit zur Verfügung gestellt bekommen, damit sich die eingebrachte Energie gleichmäßig verteilen kann. Diese Ausgleichszeit kann z.B. über eingebaute Transportsterne zur Verfügung gestellt werden. Eine Ausgleichs- bzw. Abkühlzeit kann auch nochmals nach dem Streckblasvorgang vonnöten sein. Hier ist es abermals möglich, eine aktive und / oder passive Kühlung der Behälters vorzusehen. Eine aktive Kühlung kann z.B. mit Wasser, Luft, Stickstoff oder anderen Medien von innen oder von außen erfolgen. Eine passive Kühlung kann mittels der Bereitstellung einer Transportstrecke zwischen der Streckblasmaschine 14 und der nachgeordneten Maschine erfolgen.

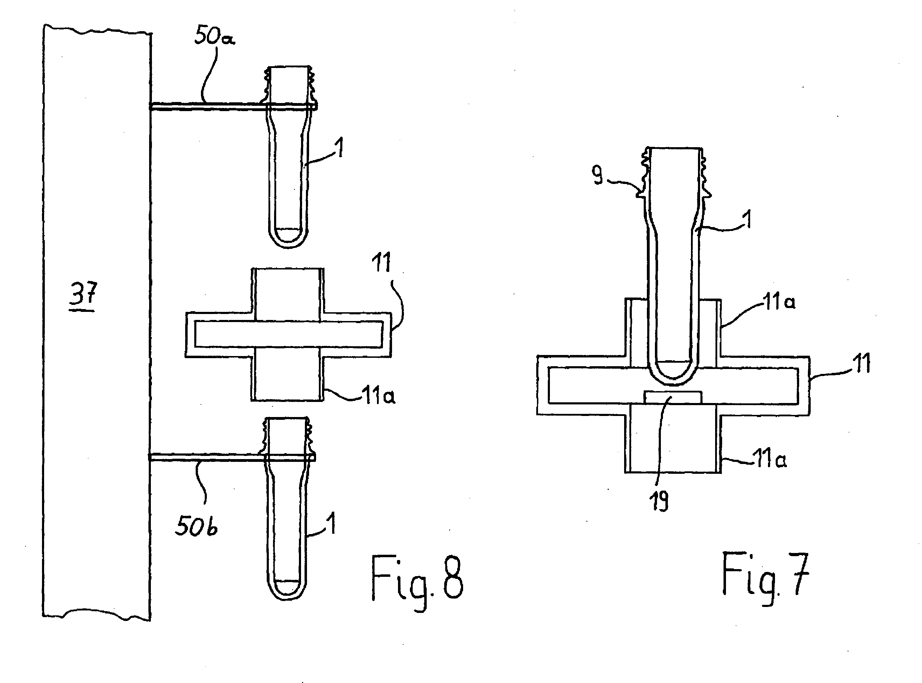

Figur 7 zeigt einen Resonator 11, der an seiner Ober- und Unterseite jeweils einen Hohlzylinder 11a aufweist. Dieser Hohlzylinder hat hauptsächlich die Wirkung einer Abschirmung von Mikrowellen. Diese Schutzvorrichtung ist hier zylinderförmig, es liegt aber im Bereich des fachmännischen Handelns, diese Schutzeinrichtung auch anders auszugestalten, also z.B. mit eckigem Querschnitt. Im Wirkungsbereich der Mikrowelle befindet sich im Resonator 11 ein Reflektorelement 19. Aufgabe dieses Reflektorelements 19 ist es, die Kuppe des Vorformlings 1 zusätzlich zu erwärmen. Das Reflektorelement 19 ist so ausgebildet, dass die Mikrowellenstrahlung in Richtung der Kuppe des Vorformlings 1 fokussiert wird. Vorteilhafter Weise ist das Reflektorelement 19 so ausgebildet, dass es während der Bewegung des Vorformlings 1 durch den Resonator 11 zumindest im Wirkungsbereich der Mikrowelle immer den gleichen Abstand zur Kuppe des Vorformlings 1 hat. Dies kann zum Beispiel dadurch bewerkstelligt werden, dass das Reflektorelement 19 in Richtung der Längsachse A des Vorformlings 1 mit durch den Resonator 11 bewegt wird. Es wäre auch denkbar, dass das Reflektorelement senkrecht zur Längsrichtung des Vorformlings bewegbar ist. Es ist aber auch denkbar, dass mehrere Reflektorelemente 19 im Wirkungsbereich der Mikrowelle angebracht sind, wobei diese auch in verschiedenen Höhen vorstellbar sind. Es ist dann möglich, jeweils die Reflektorelemente 19 seitlich in die Bewegungsbahn der Vorformlinge 1 zu schwenken. Das Reflektorelement 19 ist so ausgebildet, dass es leicht austauschbar ist. Dies hat den Vorteil, dass verschiedene Vorformlingsgeometrieen im Resonator 11 jeweils optimal verarbeitet werden können.

Figur 8 zeigt eine bevorzugte Übergabesituation von Vorformlingen 1 zur Vorrichtung sowie gleichzeitig eine Übernahmesituation von Vorformlingen 1 vom Resonator 11, bevor sie zur nächsten Maschine weitertransportiert werden.

Der Transport der Vorformlinge 1 zum Resonator 11 hin und vom Resonator 11 weg, wird hier durch Greifer 50a, 50b vorgenommen. Die Greifer sind vorzugsweise Teil eines Übergabe- bzw. Übernahmesterns, der hier durch die Greifer 50a und 50b sowie die Mittelsäule 37 nur schematisch angedeutet sind. Der Greifer 50a übernimmt dabei einen Vorformling 1 von einer stromaufwärtigen Maschine, wie z.B. einer Vorformlingsvereinzelungseinrichtung und übergibt diesen dann an eine Vorformlingshalteeinheit 26, die dann den oben beschriebenen Behandlungsvorgang durchführt, indem der Vorformling 1 zumindest einmal entlang seiner Längsachse A durch den Resonator 11 geführt wird. Tritt der Vorformling nach seiner Behandlung an der unteren Seite des Resonators 11 aus, kann er von einem Greifer 50b, der mit der gleichen Mittelsäule 37 wirkverbunden ist, wie der Greifer 50a gegriffen und an eine stromabwärts positionierte Maschine, wie z.B. eine Etikettiermaschine oder eine Füllmaschine übergeben werden. Bei Rotationsmaschinen hat diese Anordnung den Vorteil, dass ein sehr großer Drehwinkel als Prozesszeit genutzt werden kann. Mit einer solchen Anordnung können Prozesswinkel zwischen 300° und 355° erreicht werden. Außerdem ist diese Lösung sehr platzsparend, da nur ein Transportstern als Einlauf- und Auslaufstern gebraucht wird, während in herkömmlichen Lösungen zwei Transportsterne eingebaut werden.

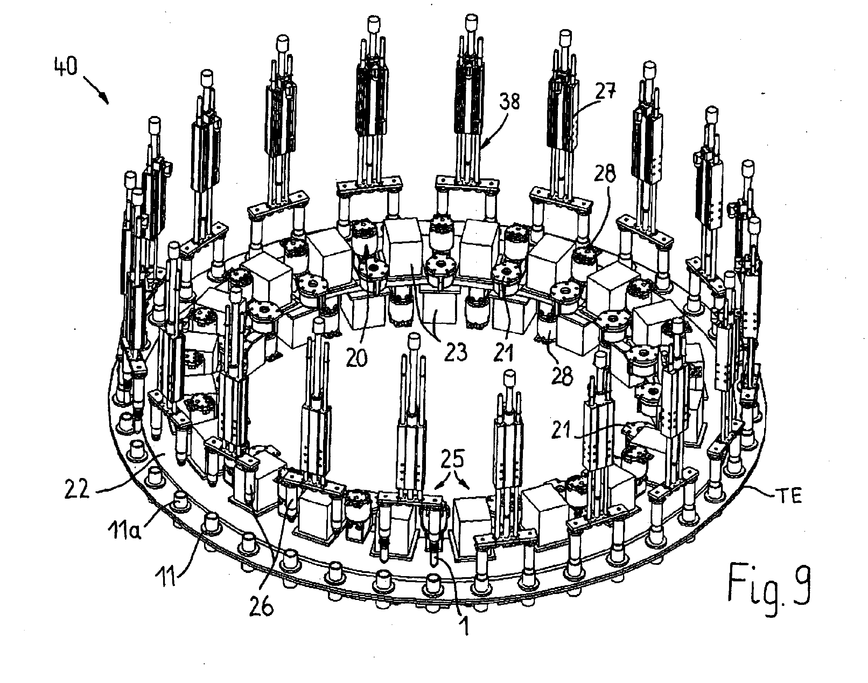

Figur 9 zeigt eine isometrische Ansicht einer anderen Ausführungsform einer Mikrowellenerwärrnungsvorrichtung, die in Rundläuferbauweise ausgebildet ist. Die Vorrichtung weist mehrere Aufnahmeeinheiten 25 auf, wobei jeweils mehrere (mindestens zwei) Aufnahmeeinheiten 25 an einem Aufnahmeträger 38 angebracht sind. Die Aufnahmeträger weisen jeweils eine Bewegungseinheit 27 auf, die für die Hubbewegung der Vorformlinge 1 in Richtung der Resonatoren 11 zuständig ist. Außerdem weisen die Vorformlingshalteeinheiten 26 einen Antrieb zur Induzierung einer Drehbewegung in die Vorformlinge 1 auf. Die Mikrowellenerwärmungsvorrichtung umfasst mehrere Mikrowellenkompaktköpfe 20, die jeweils aus einem Mikrowellentuner 23, einer Wasserlast 28 und einer Mikrowellenerzeuger 21 bestehen. Aus Platzgründen befindet sich jeweils ein Mikrowellenkompaktkopf 20 einer Aufnahmeeinheit 25 an der Oberseite eines scheibenförmigen Mikrowellenleiters 22 und ein Mikrowellenkompaktkopf 20 an der Unterseite. Der Mikrowellenleiter 22 ist als Träger 4 ausgebildet und weist eine flache Scheibenform auf, die innen hohl ist, um die Mikrowellen von dem Mikrowellenerzeuger 21 in Richtung des Resonators 11 leiten zu können. Der Mikrowellenleiter 22 kann dabei so ausgebildet sein, dass zwei Scheiben aufeinander montiert werden, die dann einen Innenhohlraum bilden und dadurch zum Hohlleiter werden, der Leiter kann allerdings auch so aufgebaut sein, dass jeweils nur Segmente aufeinander montiert werden, sodass kein durchgängiger Kreisförmiger Scheibenholleiter entsteht, sondern dass jeder Resonator 11 seinen abgegrenzten Hohlleiter 22 bildet.

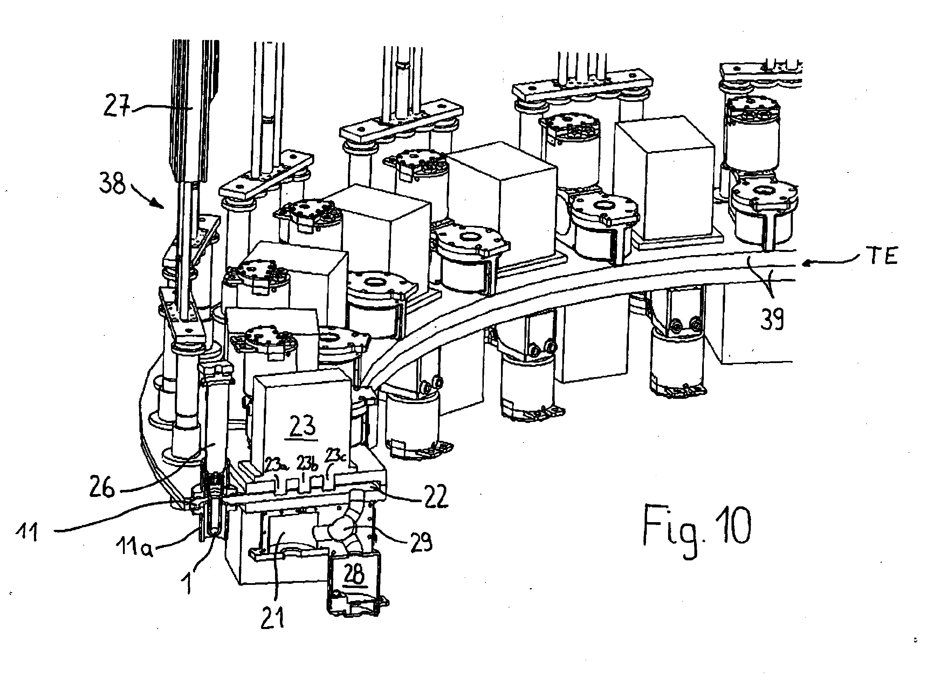

Figur 10 zeigt einen Schnitt durch den Mikrowellenleiter 22 gemäß Figur 9. Es ist zu erkennen, dass zwei Hohlleitersegmente 39 in der Resonatorebene TE aufeinander angebracht sind und somit einen Mikrowellenleiter 22 bilden. Die beiden Holleitersegmente 39 sind jeweils ringförmig aufgebaut. In Umfangsrichtung weiter außen an den Hohleitersegmenten 39 befinden sich die Resonatoren 11 mit den jeweils darüber und darunter angeordneten Hohlzylindern 11a. Im Schnitt durch den Mikrowellenholleiter 22 sind die einzelnen Bauteile gut zu erkennen. An der Unterseite der Hohlleitersegmente 39 befinde sich der Mikrowellenerzeuger 21 sowie der Zirkulator 29 und die Wasserlast 28. Durch den Zirkulator werden die Mikrowellen vom Erzeuger 21 in den Mikrowellenleiter 22 und dort am Tuner 23 vorbei in Richtung des Resonators 11 geleitet. Der Tuner ist so ausgebildet, dass drei Tuningstifte 23a, 23b und 23c in den Mikrowellenleiter 22 eintauchen, wobei hierdurch der Leitungsquerschnitt beeinflusst wird. Auf diese Weise kann eine Anpassung der Erwärmung der Vorformlinge 1 im Resonator 11 vorgenommen werden. In dieser Darstellung befindet sich gerade ein Vorformling 1 im Resonator 11.

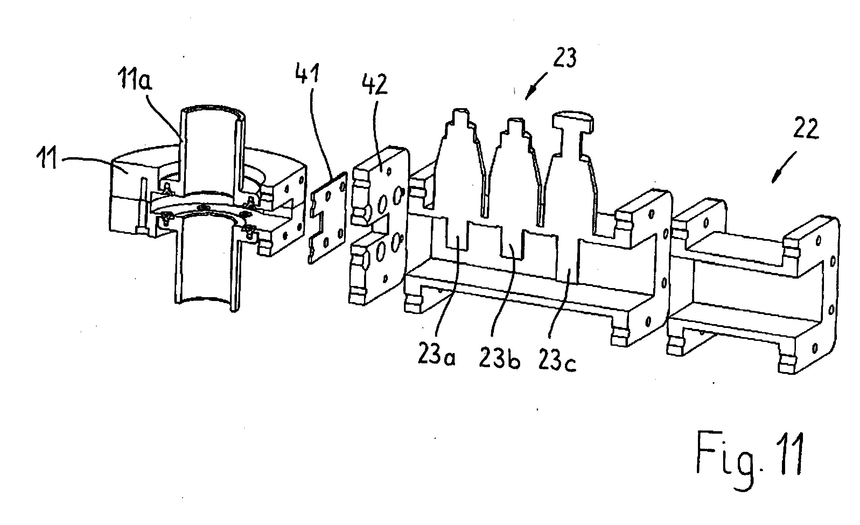

Fig. 11 zeigt eine weitere Ausführungsform eine Mikrowellenleiters 22. Entgegen der Ausführungsform gemäß Fig 10 ist der Mikrowellenleiter 22 hier nicht aus zwei Ring- bzw. Scheibenförmigen Hohlleitersegmenten 39 aufgebaut, sondern als Hohlleiterprofil, von dem mehrere Längsstücke zu einem gesamten Hohlleiter zusammengefügt werden. Auch hier ist der Mikrowellentuner 23 mit seinen drei Stiften 23a, 23b und 23c zu sehen. In Richtung vom hier nicht sichtbaren Mikrowellenerzeuger 21 zum Resonator 11 ist zusätzlich zur Einstellung einer optimalen Mikrowellenverteilung im Resonator 11 eine Blende 41 vorgesehen, die einen Durchmessersprung des Mikrowellenleiters 22 verursacht. Aus montagetechnischnen Gründen ist ein Befestigungselement 42 vorgesehen, an dem die Blende 41 befestigt ist. Das Befestigungselement 42 weist dabei ähnliche Durchgangsgrößen wie die Blende 41 auf.

Insgesamt können die Vorformlinge 1 in einer Richtung senkrecht zu ihrer Längsachse A in / durch den Resonator 11 bewegt werden. Bevorzugt ist die in eine Resonatorebene TE projizierte Bewegungsbahn der Vorformlinge 1 während der Erwärmung im Wesentlichen eine Kreisbahn. Vorteilhaft wird auch jeder zu erwärmende Abschnitt 7 der Vorformlinge 1 mehrmals, jedoch mindestens zwei Mal durch den Resonator 11 bewegt.

Wie oben erwähnt, werden bevorzugt die Kunststoffvorformlinge und insbesondere PET Vorformlinge durch einen Blasvorgang, insbesondere einen Streckblasvorgang umgeformt.

Weiterhin wäre es auch möglich, dass die Vorformlinge sowohl mit Infrarot-, als auch mit Mikrowellenstrahlung beaufschlagt werden.

Bei der Bewegungseinheit 27 für Vorformlinge 1 handelt es sich bevorzugt um mindestens einen Hub- / Senk- und mindestens einen Drehantrieb. Weiterhin umfasst bevorzugt die Vorformlingshalteeinheit 26 einen Außen- und / oder einen Innengreifer für Vorformlinge 1.

Bei einer vorteilhaften Ausführungsform ist jedem Vorformling 1 eine Mikrowellenerwärmungseinheit 3 sowie ein Mikrowellenkompaktkopf 20 zugeordnet. Daneben ist vorteilhaft ein zentraler Mikrowellenerzeuger 21 vorhanden, der über Mikrowellenleiter 22 mit der mindestens einen Mikrowellenerwärmungseinheit 3 verbunden ist.

In einer besonders vorteilhaften Ausgestaltung enthält die Vorrichtung n Mikrowellenerzeuger 21 und m Mikrowellenerwärmungseinheiten 3 aufweist, wobei gilt: m > n. Besonders bevorzugt ist die Vorrichtung als Maschine umlaufender Bauart ausgebildet.

Wie oben erwähnt, weist die Vorrichtung vorteilhaft mindestens zwei parallele Ebenen auf, in denen Vorformlinge 1 erwärmbar sind.

Bevorzugt ist die oben beschriebene Vorrichtung zur Erwärmung für Vorformlinge 1 aus Kunststoff eingerichtet ist, insbesondere für Vorformlinge 1 aus PET.

Vorteilhaft ist die Vorrichtung in eine Maschinenanordnung integriert, die weiterhin zumindest eine Streckblasmaschine 14 enthält, wobei besonders bevorzugt die Streckblasmaschine 14 eine Rotationsstreckblasmaschine ist. Weiterhin ist besonders bevorzugt vor und / oder nach dem Ofen 40 eine Infraroterwärmungseinrichtung vorhanden.

Bei einer weiteren vorteilhaften Ausführungsform sind an der Peripherie des Ofens 40 Infraroterwärmungseinrichtungen vorhanden.

Die vorliegende Erfindung ist, wie oben erwähnt, weiterhin auf eine Anordnung zum Herstellen von Behältern gerichtet, zumindest bestehend aus einer Vorrichtung zum Erwärmen von Vorformlingen 1 der oben beschriebenen Art, und einer Streckblasmaschine 14. Bevorzugt sind zwischen der Vorrichtung zum Erwärmen von Vorformlingen 1 und der Streckblasmaschine 14 Vorrichtungen zur aktiven und / oder passiven Kühlung angebracht. Weiterhin weist die Anordnung zumindest eine Füllmaschine 15 und eine Verschließmaschine 16 auf.

## Patentansprüche

1. Verfahren zum Erwärmen von Vorformlingen (1) aus einem thermoplastischen Material, mit einem zu erwärmenden Bereich (2) und einem nicht zu erwärmenden Bereich (6), wobei die Vorformlinge (1) nach ihrer Erwärmung einem Umformvorgang unterzogen werden, **wobei** der zu erwärmende Bereich (2) der Vorformlinge (1) zumindest während eines Teils der zeitlichen Dauer der Erwärmung in einem Resonator (11) mit Mikrowellen beaufschlagt wird, **dadurch gekennzeichnet, dass** zur Erwärmung der Vorformlinge eine Resonatorkavität verwendet wird, in die der zu erwärmende Bereich der Vorformlinge komplett eingeführt wird und sich die Resonatorkavität auf einer im Wesentlichen kreisförmigen Bahn bewegt.

2. Verfahren nach Anspruch 1, **dadurch gekennzeichnet, dass** jeder Vorformling (1) in einer seinen Erwärmungsbereich (2) vollständig umgebenden Kavität erwärmt wird.

3. Verfahren nach Anspruch 1, **dadurch gekennzeichnet, dass** die Vorformlinge in Richtung ihrer Längsachse (A) in / durch einen im Wesentlichen Scheiben- bzw. Plattenförmigen Resonator (11) bewegt werden, der die Vorformlinge (1) vollumfänglich umgibt.

4. Verfahren nach Anspruch 1, **dadurch gekennzeichnet, dass** die in eine Resonatorebene (TE) projizierte Bewegungsbahn der Vorformlinge (1) während der Erwärmung im Wesentlichen eine Kreisbahn ist.

5. Verfahren nach Anspruch 1, **dadurch gekennzeichnet, dass** die Vorformlinge (1) während einer Bewegung entlang einer im Wesentlichen kreisförmigen Bahn in Richtung ihrer Längsachse (A) in den Resonator (11) geführt werden, um dann in entgegengesetzter Richtung wieder aus dem Resonator (11) herausgeführt zu werden.

6. Verfahren nach Anspruch 1, **dadurch gekennzeichnet, dass** sich die Vorformlinge (1) zumindest teilweise um ihre Längsachse (A) drehen.

7. Verfahren nach Anspruch 1, **dadurch gekennzeichnet, dass** die Vorformlinge (1) während des Erwärmens ungleichmäßig um ihre Längsachse (A) gedreht werden.

8. Verfahren nach Anspruch 1, **dadurch gekennzeichnet, dass** die Vorformlinge (1) bezüglich ihrer Länge und / oder ihrer Dicke ungleichmäßig erwärmt werden.

9. Verfahren nach Anspruch 1, **dadurch gekennzeichnet, dass** die Vorformlinge (1) bezüglich ihres Umfangs ungleichmäßig erwärmt werden.

10. Verfahren nach Anspruch 1, **dadurch gekennzeichnet, dass** die Vorformlinge sowohl mit Infrarot-, als auch mit Mikrowellenstrahlung beaufschlagt werden.

11. Verfahren nach Anspruch 1, **dadurch gekennzeichnet, dass** im Resonator (11) oder in der Kavität eine anisotrope Feldstärkenverteilung generiert wird

12. Vorrichtung zur Durchführung des Verfahrens nach einem des Ansprüche 1-11 zum Erwärmen von Vorformlingen (1) mit Mikrowellen aufweisend mindestens einen Mikrowellenerzeuger (21), einen Mikrowellenleiter (22) und einen Resonator (11), wobei der Resonator (11) eine Resonatorkavität aufweist, in die der zu erwärmende Bereich der Vorformlinge (1) komplett eingeführt wird und die Vorrichtung als Maschine umlaufender Bauart ausgebildet ist, wobei
jedem Vorformling (1) eine Mikrowellenerwärmungseinheit (3) zugeordnet ist.

13. Vorrichtung nach Anspruch 12, **dadurch gekennzeichnet, dass** der Resonator (11) im Wesentlichen ringförmig ist, wobei eine Öffnung vorgesehen ist, durch die ein Vorformling (1) hindurchführbar ist.

14. Vorrichtung nach wenigstens Anspruch 12, **dadurch gekennzeichnet, dass** sie in eine Maschinenanordnung integriert ist, die weiterhin zumindest eine Streckblasmaschine (14) enthält.

## Claims

1. Method for heating preforms (1) of a thermoplastic material that comprise a region (2) to be heated and a region (6) not to be heated, the preforms (1) being subjected to a reshaping operation after their heating, wherein microwaves are applied to the region (2) of the preforms (1) that is to be heated, at least during a portion of the period of heating, in a resonator (11), **characterized in that** for the heating of the preforms a resonator cavity is used into which the area of the preforms to be heated is inserted completely and that the resonator cavity moves along a substantially circular path.

2. Method according to Claim 1, **characterized in that** each preform (1) is heated in a cavity which completely encompasses its heating area (2).

3. Method according to Claim 1, **characterized in that**
the preforms are moved, in the direction of their longitudinal axis (A), into/through the substantially disc-shaped or plate-shaped resonator (11), which encompasses the full circumference of the preforms (1).

4. Method according to claim 1, **characterized in that** the movement path of the preforms projected onto a resonator plane (TE) is substantially a circular path during the heating.

5. Method according to Claim 1, **characterized in that** the preforms (1), during a movement along a substantially circular path, are guided into the resonator (11) in the direction of their longitudinal axis (A), in order then to be guided back out of the resonator (11) in the opposite direction.

6. Method according to claim 1, **characterized in that** the preforms (1) rotate at least partially about their longitudinal axis (A).

7. Method according to Claim 1, **characterized in that** the preforms (1) are rotated in a nonuniform manner about their longitudinal axis (A) during the heating.

8. Method according to claim 1, **characterized in that** the preforms (1) are heated in a nonuniform manner with respect to their length and/or their thickness.

9. Method according to claim 1, **characterized in that** the performs (1) are heated in a nonuniform manner with respect to their circumference.

10. Method according to claim 1, **characterized in that** the preforms are acted upon with infrared radiation as well as with microwave radiation.

11. Device according to claim 1, **characterized in that** an anisotropic field strength distribution is generated in the resonator (11) or in the cavity.

12. Device for executing the method according to one of the claims 1 - 11 for heating preforms (1) with microwaves comprising at least a microwave generator (21), a microwave conductor (22) and a resonator (11), the resonator (11) comprising a resonator cavity into which the area of the preforms (1) which is to be heated is inserted completely and the device being designed as a rotating type machine, wherein a microwave heating unit (3) is allocated to each preform (1).

13. Device according to claim 12, **characterized in that** the resonator (11) is of a substantially annular shape, an opening being provided, through which a preform (1) can be guided.

14. Device according to at least claim 12, **characterized in that** it is integrated in a machine arrangement which further comprises at least a stretch blow moulding machine (14).

## Revendications

1. Procédé de chauffage de préformes (1) en matière thermoplastique, présentant une zone à chauffer (2) et une zone à ne pas chauffer (6), les préformes (1) étant soumises à un processus de formage après leur chauffage, la zone à chauffer (2) des préformes (1) étant alimentée à des micro-ondes dans un résonateur (11) au moins pendant une partie de la durée du chauffage, **caracterisée en ce qu'**une cavité du résonateur est utilisée pour le chauffage des préformes, où la zone des préformes à chauffer est entièrement introduite, et **en ce que** la cavité du résonateur se déplace sur une trajectoire sensiblement circulaire.

2. Procédé selon la revendication 1, **caractérisé en ce que** chaque préforme (1) est chauffée dans une cavité entourant complètement sa zone à chauffer (2).

3. Procédé selon la revendication 1, **caractérisé en ce que** les préformes sont déplacées dans la direction de leur axe longitudinal (A) dans / par un résonateur (11) sensiblement en forme de disque ou de plateau respectivement, lequel entoure complètement les préformes (1).

4. Procédé selon la revendication 1, **caractérisé en ce que**, projetée sur un plan de résonateur (TE), la trajectoire de déplacement des préformes (1) pendant le chauffage est sensiblement circulaire.

5. Procédé selon la revendication 1, **caractérisé en ce que** les préformes (1) sont guidées dans le résonateur (11) au cours d'un déplacement sur une trajectoire sensiblement circulaire dans la direction de leur axe longitudinal (A), pour être ensuite ressorties du résonateur (11) dans la direction opposée.

6. Procédé selon la revendication 1, **caractérisé en ce que** les préformes (1) tournent au moins partiellement autour de leur axe longitudinal (A).

7. Procédé selon la revendication 1, **caractérisé en ce que** les préformes (1) sont tournées irrégulièrement autour de leur axe longitudinal (A) pendant le chauffage.

8. Procédé selon la revendication 1, **caractérisé en ce que** la longueur et / ou l'épaisseur des préformes (1) sont chauffées de manière non homogène.

9. Procédé selon la revendication 1, **caractérisé en ce que** la circonférence des préformes (1) est chauffée de manière non homogène.

10. Procédé selon la revendication 1, **caractérisé en ce que** les préformes sont exposés à un rayonnement infrarouge ainsi qu'à un rayonnement micro-ondes.

11. Procédé selon la revendication 1, **caractérisé en ce qu'**une répartition anisotrope d'intensité de champ est générée dans le résonateur (11) ou dans la cavité.

12. Installation pour l'exécution du procédé selon l'une des revendications 1 à 11, pour le chauffage de préformes (1) au moyen de micro-ondes, comprenant au moins un générateur de micro-ondes (21), un microguide d'ondes (22) et un résonateur (11), le résonateur (11) comportant une cavité de résonateur où la zone des préformes (1) à chauffer est entièrement introduite, et l'installation étant réalisée comme machine de type rotatif,
une unité de chauffage par micro-ondes (3) étant associée à chaque préforme (1).

13. Installation selon la revendication 12, **caractérisée en ce que** le résonateur (11) est sensiblement en forme d'anneau, une ouverture étant prévue, par laquelle peut passer une préforme (1).

14. Installation selon au moins la revendication 12, **caractérisée en ce qu'**elle est intégrée à un agencement de machines qui comporte en outre au moins une machine d'étirage-soufflage (14).
